Europäisches Patentamt

European Patent Office

Office européen des brevets

(19)

(11) Veröffentlichungsnummer: **0 374 473**

**A2**

(12) # EUROPÄISCHE PATENTANMELDUNG

(21) Anmeldenummer: **89121164.1**

(22) Anmeldetag: **16.11.89**

(51) Int. Cl.⁵: **H04B 1/08, H05K 5/00**

(30) Priorität: **22.12.88 DE 3843190**

(43) Veröffentlichungstag der Anmeldung:
**27.06.90 Patentblatt 90/26**

(84) Benannte Vertragsstaaten:
**AT DE FR IT**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth/Bay.(DE)**

(72) Erfinder: **Mamet, Alfred, Dipl-Designer**
**Grundig E.M.V.**
**Max Grundig HollÄnd. Stiftung & Co KG**
**Kurgartenstrasse 37 D-8510 Fürth/Bay(DE)**

(54) **Batteriebetriebenes und von einem Benutzer leicht umhängbares Gerät zur Wiedergabe von elektroakustischen Signalen.**

(57) Beschrieben ist ein batteriebetriebenes und von einem Benutzer leicht umhängbares Gerät zur Wiedergabe von elektroakustischen Signalen, wobei die Signale vorwiegend von einem Rundfunk-Empfangsteil über einen Kleinkopfhörer wiedergegeben werden und das Gerät die Form einer Diskusscheibe mit verbreiterter Stirnseite aufweist. Das Diskusscheibenförmige Gerät besitzt eine kreisförmige Öffnung zur Unterbringung eines Kleinkopfhörers mit Anschlußkabel und die Stirnseite ist mit einer wickelnutförmigen Vertiefung versehen, in die das Kopfhörerkabel bedarfsweise aufgewickelt werden kann.

*Fig. 1*

EP 0 374 473 A2

# BATTERIEBETRIEBENES UND VON EINEM BENUTZER LEICHT UMHÄNGBARES GERÄT ZUR WIEDERGABE VON ELEKTROAKUSTISCHEN SIGNALEN

Die Erfindung betrifft ein batteriebetriebenes und von einem Benutzer leicht umhängbares Gerät zur Wiedergabe von elektroakustischen Signalen, wobei die Signale vorwiegend von einem Rundfunk-Empfangsteil über einen Kleinkopfhörer wiedergegeben werden.

Es sind batteriebetriebene Gerät zur Wiedergabe von Hörereignissen bekannt, die unterschiedliche Formen aufweisen und von einem Benutzer über einen Traggurt leicht transportierbar sind. Aus der DE-PS 28 13 000 ist ein Gerät für die stereophone Wiedergabe von Hörereignissen bekannt, das am Körper eines Benutzers angeordnet ist, und die Wiedergabe der Hörereignisse über einen Kopfhörer erfolgt. Die Formgebung dieses bekannten Gerätes ist jedoch nicht allseitig flächengleich, was für die Handhabung nachteilig ist, sofern das Gerät wie häufig erwünscht, wechselweise bei gleicher Bedienungslage über beide Schulterseiten oder mittig am Hals getragen werden soll. Wünschenswert ist auch, daß das Kopfhörerkabel nur in der erforderlichen Bedarfslänge dem Gerät entnommen werden kann, und der Kleinkopfhörer in einfachster Weise im Gerät unterzubringen ist.

Aufgabe der Erfindung ist es daher, ein batteriebetriebenes und von einem Benutzer leicht umhängbares Gerät zur Wiedergabe von elektroakustischen Signalen zu schaffen, das eine neutrale Traglage und eine einfache Unterbringungsmöglichkeit für das Kopfhörerkabel sowie den Kleinkopfhörer aufweist.

Diese Aufgabe wird durch die kennzeichnenden Merkmale im Anspruch 1 gelöst.

Die Unteransprüche zeigen vorteilhafte Ausgestaltungen der Erfindung.

Die Erfindung wird nachfolgend anhand der Zeichnungen erläutert:

Fig. 1 ist eine Draufsicht auf eine Außenseite eines in der Form einer Diskusscheibe ausgeführten batteriebetriebenen und umhängbaren Rundfunk-Empfangsgerätes,

Fig. 2 ist eine Seitenansicht der Fig. 1 mit aufgewickeltem Kopfhörerkabel.

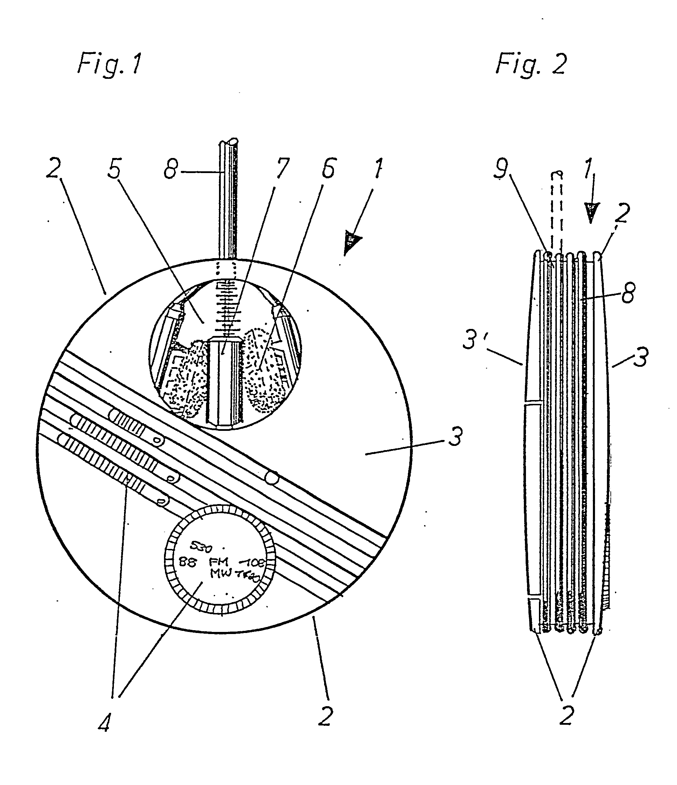

Die Fig. 1 zeigt die Draufsicht auf ein batteriebetriebenes und von einem Benutzer leicht umhängbares Rundfunk-Empfangsgerät 1, das die Form einer Diskusscheibe aufweist. Die umlaufende Stirnseite 2 des diskusscheibeinähnlichen Gerätes 1 ist jedoch gegenüber einer normalen Diskusscheibe verbreitert ausgeführt, wie dies aus der Fi- (3. 2 ersichtlich ist. Im dargestellten Beispiel sind auf einer der beiden gewölbten Außenseiten 3 die für ein Rundfunk-Empfangsgerät erforderlichen Bedienungselemente 4 angeordnet. Je nach Ausstattung des Rundfunk-Empfangsteils bestehen die Bedienungselemente, z.B. aus einer Sender-Einstellscheibe, aus einem Lautstärke- und Klangregler, aus einer Sender-Frequenzanzeige und aus einem Frequenz -Wahlschalter. Denkbar ist auch, daß in einer derartigen Gerätausführung ein Kassettenlaufwerk eingesetzt ist, wobei dieses mit einem Rundfunk-Empfangsteil kombiniert sein kann, und hierbei zur Unterbringung beider Geräteteile auch beide Außenseiten 3, 3' des Gerätes einbezogen sein können. In der Nähe des Randbereiches weist die Außenseite eine kreisförmige Öffnung 5 auf, in die nach dem dargestellten Beispiel ein Kleinkopfhörer 6 eingelegt ist. Ebenfalls befindet sich in der Öffnung 5 ein Anschlußstecker 7, der den Kleinkopfhörer 6 mit dem Gerät 1 elektrisch verbindet. Das Anschlußkabel 8 des Kleinkopfhörers 6 wird durch die verbreiterte Stirnseite 2 des Gerätes geführt, und kann bedarfsweise gleichzeitig als Art Tragriemen ausgebildet sein. Über einen derartigen Tragriemen kann das Gerät um den Hals oder über die Schulter eines Benutzers gehängt werden. Durch die allseits gleiche Formgebung ist das Gerät in allen Traglagen griffsymmentrisch und daher leicht bedienbar.

Die Fig. 2 läßt erkennen, wie die verbreiterte Stirnseite des Gerätes 1 ausgebildet ist. Die Stirnseite 2 weist eine das Kopfhörerkabel aufnehmende wickelnutförmige Vertiefung 9 auf. In dem dargestellten Beispiel ist das Anschlußkabel 8 des Kleinhopfhörers 6 in der nutartigen Vertiefung 9 aufgewickelt gezeichnet, so daß das Gerät mit dem eingelegten Kleinkopfhörer und dem aufgewickelten Anschlußkabel eine Einheit bildet. Eine der beiden Außenseiten 3' des Gerätes 1 kann vorteilhafterweise unterteilt sein und der unterteilte Bereich kann als Batterieeinlegefach genutzt werden.

Es kann auch wünschenswert sein, daß die Öffnung 5 im Gerät 1 über ein nicht näher dargestelltes Abdeckteil zu verschließen ist. Ferner ist es möglich, daß die wickelnutartige Vertiefung 9 als eine für sich drehbare Haspel ausgebildet ist.

## Ansprüche

1. Batteriebetriebenes und von einem Benutzer leicht umhängbares Gerät zur Wiedergabe von elektroakusischen Signalen, wobei die Signale vorwiegend von einem Rundfunk-Empfangsteil über einen Kleinkopfhörer wiedergegeben werden, **dadurch gekennzeichnet**, daß das Gerät (1) die Form einer Diskusscheibe mit verbreiterter Stirnseite (2) aufweist, daß wenigstens auf einer der beiden gewölbten Außenseiten (3, 3') Bedienungselemente (4), z.B. eine Sender-Einstellscheibe, einen Lautstärke- und Klangregler, eine Sender-Frequenzanzeige, ein Frequenz-Wahlschalter usw., angeordnet sind, daß in der Nähe des Randbereiches eine vorzugsweise kreisförmige Öffnung (5) derart eingebracht ist, daß ein Kleinkopfhörer (6) mit einem Anschlußkabel (8) und Anschlußstecker (7) in die Öffnung einzulegen ist, und daß die verbreiterte Stirnseite (2) eine das Kopfhörerkabel aufnehmende wickelnutförmige Vertiefung (9) aufweist.

2. Batteriebetriebenes Gerät nach Anspruch 1, **dadurch gekennzeichnet**, daß das Kopfhörerkabel derart ausgebildet und am Gerät befestigt ist, daß das Gerät bedarfsweise um den Hals oder über die Schulter eines Benutzers gehängt werden kann.

3. Batteriebetriebenes Gerät nach den Ansprüchen 1 und 2, **dadurch gekennzeichnet**, daß die Öffnung für den Kleinkopfhörer mit einem Abdeckteil zu verschließen ist.

EP 0 374 473 A2

Fig.1

Fig. 2